# DEMANDE DE BREVET EUROPEEN

(11) **EP 2 050 535 A1**
(43) Date de publication de la demande: **22.04.2009**
(21) Numéro de dépôt: 08166830.3
(22) Date de dépôt: 16.10.2008
(51) Int. Cl.: B23Q 17/09, B23B 29/04, B23B 49/00, H04B 7/00

(54) **Support d'outil instrumenté et porte-outil associé**

(30) Priorité: 16.10.2007 FR 0707253; 16.10.2007 FR 0707252
(71) Demandeur: Centre Technique de l'Industrie du Decolletage, 74300 Cluses (FR)
(72) Inventeur: Busi, Roger, 74800 St. Laurent (FR)
(74) Mandataire: Croonenbroek, Thomas Jakob

(57) **Abrégé**

L'invention concerne un support d'outil d'une machine-outil, apte à recevoir une plaquette de coupe (5) pour l'usinage d'une pièce, **caractérisé en ce qu**'il comporte d'une part, un capteur (6) apte à déterminer un paramètre représentatif d'une action de coupe entre une pièce à usiner et une plaquette (5) et d'autre part, des moyens de transmission radio (8) des signaux de mesure du capteur (6), ces dits moyens de transmission radio (8) étant portés par le support d'outil et aptes à transmettre et à recevoir des signaux de mesure avec une station de radio (10).
L'invention concerne également un porte-outil (1) destiné à être monté sur une machine-outil, **caractérisé en ce qu**'il comporte un support d'outil tel que précédemment décrit, le support d'outil comportant une plaquette de coupe (5).

## Description

La présente invention concerne support d'outil instrumenté tel qu'un porte-plaquette ou un porte-outil, destiné à être monté dans une machine-outil et apte à recevoir une plaquette de coupe pour l'usinage d'une pièce.

L'augmentation de la productivité, les contraintes de qualité de l'usinage liées par exemple, à l'état de surface des pièces usinées, ainsi que l'évolution des matériaux des pièces à usiner, nécessitent la constante évolution des procédés d'usinage.

Afin d'atteindre les nouveaux critères de performances requis, des procédés d'usinage visant à optimiser les conditions de coupe ont été développé.

Ainsi, on connaît le concept industriel de couple outil - matière (COM) définit par la norme NFE 66-520 pour la sélection des paramètres d'entrée de coupe tels que l'avance, la profondeur de coupe, la largeur de passe ou la vitesse de coupe des outils dans la matière à usiner.

Cette norme préconise que les conditions d'usinage sont propres à un couple outil - matière usinée, et qu'une étude de l'évolution de paramètres de sortie de coupe, tels que les vibrations, la température des outils, la forme des copeaux, les efforts de coupe ou la puissance de la broche de la machine-outil, permet la détermination d'un domaine d'emploi optimal en termes de plages d'avances et de vitesses de coupe des outils dans la matière à usiner.

On s'intéresse donc plus précisément à l'instrumentation les machines-outils pour la surveillance des paramètres de sortie de coupe, via la mesure de paramètres représentatifs d'une action de coupe.

On connaît déjà des outils instrumentés de capteurs pour la mesure en cours d'usinage, de paramètres représentatifs d'une action de coupe.

Ainsi, la demande de brevet français FR 2 616 218, décrit un procédé pour la détection de pièces d'usure dans lequel on intègre une sonde électrique dans l'outil pour détecter le contact avec la pièce en cours d'usinage lorsque l'usure atteint la sonde.

Toutefois, lorsque les outils sont montés dans les porte-outils, ceux-ci ne sont pas toujours faciles à instrumenter et à mettre en oeuvre à cause des connections électriques du capteur, et notamment pour le remplacement d'un capteur défaillant.

A cet effet, l'invention a pour objet un support d'outil d'une machine-outil, apte à recevoir une plaquette de coupe pour l'usinage d'une pièce, caractérisé en ce qu'il comporte d'une part, un capteur apte à déterminer un paramètre représentatif d'une action de coupe entre une pièce à usiner et une plaquette et d'autre part, des moyens de transmission radio des signaux de mesure du capteur, ces dits moyens de transmission radio étant portés par le support d'outil et aptes à transmettre et à recevoir des signaux de mesure avec une station de radio.

L'invention a également pour objet un porte-outil destiné à être monté sur une machine-outil, caractérisé en ce qu'il comporte un support d'outil tel que précédemment décrit, le support d'outil comportant une plaquette de coupe.

D'autres avantages et caractéristiques apparaîtront à la lecture de la description de l'invention, ainsi que des dessins annexés sur lesquels :
- la figure 1 représente une vue schématique d'un porte-outil et,
- la figure 2 représente une vue schématique d'un mode particulier de réalisation de l'invention.

Sur ces figures, les éléments identiques portent les mêmes numéros de référence.

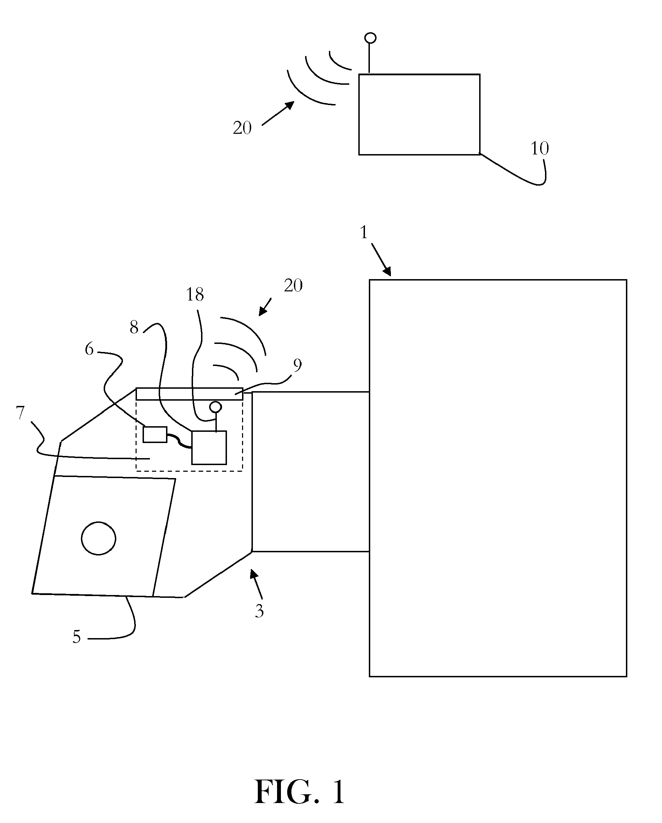

La figure 1 illustre un porte-outil 1 destiné à être monté sur une machine-outil (non représentée), telle qu'une décolleteuse.

Le porte-outil 1 comporte un porte-plaquette 3 interchangeable, apte à recevoir une plaquette de coupe 5 pour l'usinage d'une pièce.

Le porte-plaquette 3 permet de changer aisément la plaquette coupante 5 lorsque celle-ci est usée ou inadaptée sans avoir à changer l'ensemble porte-outil 1 au complet.

La plaquette de coupe 5, présentant dans cet exemple une forme rhombique, est de préférence en matériau fritté (carbure ou céramique).

La plaquette 5 est portée et maintenue fixée au porte-plaquette 3 correspondant par un montage amovible classique.

On désigne le porte-plaquette 3 ou le porte-outil 1 comme le support d'outil.

Le support d'outil comporte d'une part, un capteur apte à déterminer un paramètre représentatif d'une action de coupe entre une pièce à usiner et une plaquette et d'autre part, des moyens de transmission radio des signaux de mesure du capteur.

Les moyens de transmission radio sont portés par le support d'outil et sont aptes à transmettre et à recevoir des signaux de mesure avec une station de radio.

Les moyens de transmission radio peuvent être fixés sur le support d'outil ou bien être logés dans celui-ci.

Ainsi, les moyens de transmission radio transmettent et reçoivent des signaux de mesure avec une station de radio sans liaison filaire, et en cours d'usinage, la tourelle recevant les supports d'outils est libre de tourner sur plus de 360°.

Selon un premier exemple, le support d'outil est formé par un porte-outil d'une machine-outil et est apte à recevoir un porte-plaquette 3 comportant une plaquette de coupe 5.

Selon un deuxième exemple, le support d'outil est formé par un porte-plaquette 3 destiné à être monté dans un porte-outil d'une machine-outil et apte à recevoir la plaquette de coupe 5.

On a représenté sur la figure 1, le cas où le support d'outil est formé par un porte-plaquette 3.

Les moyens de transmission radio 8 sont aptes à transmettre et à recevoir des signaux de mesure par voie aérienne sous forme d'ondes électromagnétiques 20 avec une station de radio 10, située à distance du porte-plaquette 3.

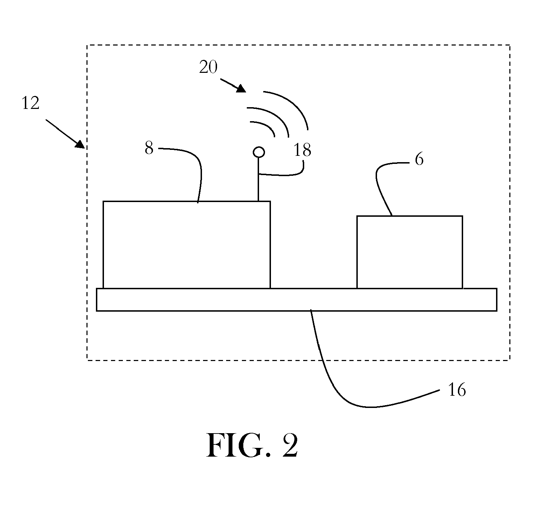

Le capteur 6 est électriquement connecté aux les moyens de transmission radio 8 et ils forment de préférence, une unité fonctionnelle 12, facilement manipulable et donc plus facile à changer en cas de défaillance (figure 2).

Selon un mode de réalisation, le porte-plaquette 3 est réalisé en fibres de carbone ou en nanotubes de carbone et comporte au moins un logement 7 (en pointillés sur la figure 1) pour le capteur 6.

Les fibres de carbone sont à la base de matériaux composites de faible densité et de hautes performances mécaniques.

Le nanotube est une structure cristalline particulière, de forme tubulaire, creuse et close, composée d'atomes disposés régulièrement en pentagones, hexagones et/ou heptagones, obtenue à partir de certains matériaux, en particulier le carbone et le nitrure de bore et présentent une excellente rigidité. Ses propriétés mécaniques le rendent susceptible de remplacer les fibres de carbone.

Ainsi, l'usinage du porte-plaquette 3 pour le logement 7 d'un capteur 6 permet d'obtenir un porte-plaquette 3 instrumenté ayant conservé un haut degré de résistance, notamment face aux efforts exercés sur lui en cours d'usinage. En outre, les fibres de carbone ou en nanotubes sont perméables aux ondes électromagnétiques 20. Cette propriété permet aux ondes électromagnétiques 20 d'être facilement propagées et transmises à la station de radio 10. Le porte- plaquette 3 en fibres de carbone ou en nanotubes permet ainsi d'obtenir à la fois un excellent comportement mécanique et une bonne perméabilité aux ondes électromagnétiques.

De préférence, le logement 7 est une cavité borgne, réalisée par perçage ou par frittage du porte-plaquette 3.

On choisit de réaliser un logement 7 au plus proche de la zone de coupe, afin d'optimiser la mesure du capteur 6, dans une zone en porte-à-faux du support d'outil, soumise à la flexion.

Ainsi disposé derrière la plaquette 5, le capteur 6 est situé au plus proche de la zone de coupe.

On peut également prévoir plusieurs capteurs 6 logés dans plusieurs logements correspondants du porte-plaquette 3 et correspondants à différentes grandeurs physiques caractéristiques des paramètres de sortie de coupe de l'usinage.

En outre, les moyens de transmission radio 8 peuvent également être fixés dans le logement 7.

Le porte-plaquette 3 peut également comporter un couvercle de protection 9 en fibres de carbone ou en nanotubes pour couvrir le logement 7 et ainsi protéger le capteur 6 et les moyens de transmission radio 8, des agressions extérieures dues à l'environnement de fonctionnement de la machine-outil. La perméabilité du couvercle 9 vis-à-vis des ondes électromagnétiques 20 permet la réception et la transmission de celles-ci avec la station de radio 10.

Le couvercle de protection 9 peut être fixé de manière amovible ou bien sceller le capteur 6 et les moyens de transmission radio 8, après leur assemblage dans le logement 7..

Dans le cas d'un capteur optique, le couvercle 9 peut comporter une ouverture formée par une fenêtre transparente (non représentée), pour permettre au capteur 6 de réaliser une mesure d'un paramètre représentatif d'une action de coupe entre une pièce à usiner et la plaquette 5.

Avantageusement, les moyens de transmission radio 8 comportent un circuit imprimé 16 et une antenne 18 pour l'émission et la réception des ondes électromagnétiques 20 (figure 2).

Le capteur 6 et les moyens de transmission radio 8 sont de préférence, électriquement connectés à une unique carte de circuit imprimé 16.

De manière avantageuse, les moyens de transmission radio 8 sont aptes à transmettre et à recevoir des signaux de mesure dans une bande passante pour laquelle les fréquences provenant de la machine-outil sont d'amplitude minimale.

On évite ainsi les plages de fréquence bruitées par les parasites par exemple vibratoires ou électromagnétiques, provenant de la machine-outil en fonctionnement.

Par ailleurs, le capteur 6 est avantageusement sensible à un paramètre représentatif d'une action de coupe entre une pièce à usiner et une plaquette 5 montée sur le porte-plaquette 3.

Le paramètre représentatif est une donnée de sortie de coupe tel qu'une vibration, tel que la température des outils, un effort de coupe ou la puissance de la broche de la machine-outil.

Par exemple, le capteur 6 est un capteur mécanique de déplacement ou de vibration, sensible à une déformation tel qu'un allongement, une compression ou une torsion.

Par exemple, on prévoit un capteur 6 comportant au moins une jauge de contrainte. Les jauges de contraintes présentent l'avantage d'être peu chères et faciles à agencer.

On peut disposer ainsi plusieurs jauges de contraintes en pont de Wheatstone.

Par ailleurs, on peut prévoir que le capteur 6 comporte un élément sensible à la température, tel qu'un thermocouple.

On comprend qu'avec un support d'outil comportant d'une part, un capteur 6 apte à déterminer un paramètre représentatif d'une action de coupe entre une pièce à usiner et une plaquette 5 et d'autre part, des moyens de transmission radio 8 des signaux de mesure du capteur 6, on obtient un support d'outil instrumenté simple à mettre en oeuvre au cours de l'usinage d'une pièce.

## Revendications

1. Support d'outil d'une machine-outil apte à recevoir une plaquette de coupe (5) pour l'usinage d'une pièce, **caractérisé en ce qu'**il comporte d'une part, un capteur (6) apte à déterminer un paramètre représentatif d'une action de coupe entre une pièce à usiner et une plaquette (5) et d'autre part, des moyens de transmission radio (8) des signaux de mesure du capteur, ces dits moyens de transmission radio (8) étant portés par le support d'outil et aptes à transmettre et à recevoir des signaux de mesure avec une station de radio (10).

2. Support d'outil selon la revendication 1, **caractérisé en ce que** lesdits moyens de transmission radio (8) sont aptes à transmettre et à recevoir des signaux de mesure dans une bande passante pour laquelle les fréquences provenant de la machine-outil sont d'amplitude minimale.

3. Support d'outil selon l'une quelconque des revendications 1 ou 2, **caractérisé en ce que** le capteur (6) et lesdits moyens de transmission radio (8) forment une unité fonctionnelle (12).

4. Support d'outil selon la revendication 3, **caractérisé en ce que** le capteur (6) et lesdits moyens de transmission radio (8) sont électriquement connectés à une unique carte de circuit imprimé (16).

5. Support d'outil selon l'une quelconque des revendications précédentes, **caractérisé en ce que** le capteur (6) est sensible à une déformation.

6. Support d'outil selon la revendication 5, **caractérisé en ce que** le capteur (6) comporte au moins une jauge de contrainte.

7. Support d'outil selon l'une quelconque des revendications précédentes, **caractérisé en ce qu'**il est formé par un porte-outil d'une machine-outil, apte à recevoir un porte-plaquette comportant une plaquette de coupe.

8. Support d'outil selon l'une quelconque des revendications 1 à 7, **caractérisé en ce qu'**il est formé par un porte-plaquette (3) destiné à être monté dans un porte-outil d'une machine-outil et apte à recevoir la plaquette de coupe (5).

9. Support d'outil selon la revendication 8, **caractérisé en ce qu'**il est réalisé en fibres de carbone ou en nanotubes de carbone et comporte au moins un logement (7) pour ledit capteur (6).

10. Support d'outil selon la revendication 9, **caractérisé en ce qu'**il comporte un couvercle de protection (9) réalisé en fibres de carbone ou en nanotubes de carbone pour couvrir le logement (7).

11. Support d'outil selon l'une quelconque des revendications 9 ou 10, **caractérisé en ce que** le logement (7) est situé dans une zone en porte-à-faux du support d'outil.

12. Support d'outil selon l'une quelconque des revendications 9 à 11, **caractérisé en ce que** les moyens de transmission radio (8) sont fixés dans le logement (7).

13. Porte-outil (1) destiné à être monté sur une machine-outil, **caractérisé en ce qu'**il comporte un support d'outil selon l'une quelconque des revendications 8 à 12, le support d'outil comportant une plaquette de coupe (5).
